# EUROPÄISCHE PATENTSCHRIFT

(11) **EP 1 321 273 B1**
(45) Veröffentlichungstag und Bekanntmachung des Hinweises auf die Patenterteilung: **08.02.2006**
(21) Anmeldenummer: 02027335.5
(22) Anmeldetag: 07.12.2002
(51) Int. Cl.: B29C 45/18, B29C 45/76, B29C 45/77

(54) **Regelung für einen Spritzgiess-Compounder**
Control of an injection molding - compounding machine
Contrôle d'une presse à injecter avec mélangeur

(30) Priorität: 21.12.2001 DE 10163409
(43) Veröffentlichungstag der Anmeldung: 25.06.2003
(60) Teilanmeldung: 05109238.5
(73) Patentinhaber: Krauss-Maffei Kunststofftechnik GmbH, 80997 München (DE)
(72) Erfinder: Wobbe, Hans, Dr., 82211 Herrsching (DE)
(74) Vertreter: Zollner, Richard

(56) Entgegenhaltungen:
- US-A1- 2001 048 181
- PATENT ABSTRACTS OF JAPAN vol. 017, no. 507 (M-1479), 13. September 1993 (1993-09-13) & JP 05 131509 A (TOSHIBA MACH CO LTD), 28. Mai 1993 (1993-05-28)
- PATENT ABSTRACTS OF JAPAN vol. 012, no. 045 (M-667), 10. Februar 1988 (1988-02-10) & JP 62 198417 A (JAPAN STEEL WORKS LTD:THE), 2. September 1987 (1987-09-02)
- PATENT ABSTRACTS OF JAPAN vol. 2000, no. 15, 6. April 2001 (2001-04-06) & JP 2000 334775 A (GE TOSHIBA SILICONES CO LTD), 5. Dezember 2000 (2000-12-05)

## Beschreibung

Die Erfindung bezieht sich auf ein Regel- bzw. Steuerverfahren für einen Spritzgieß-Compounder.

Spritzgieß-Compounder sind Vorrichtungen zum Herstellen von Kunststoffartikeln und bestehen im wesentlichen aus einer Plastifiziereinheit mit einer darin angeordneten Schnecke, wobei der Plastifiziereinheit über eine oder mehrere Dosiervorrichtungen als Zuschlagsstoffe Kunststoffgranulat, Fasermaterialien und andere Zuschlagsstoffe zugeführt werden. Diese Materialien werden durch Drehung der Schnecke oder der Schnecken plastifiziert und in Längsrichtung der Plastifiziereinheit einem Kopf zugeführt, aus dem sie in ein Einspritzaggregat in Form einer Kolben-Zylinder-Anordnung gelangen. Mittels des Einspritzaggregats wird das so plastifizierte und erhitzte Kunststoffinaterial in ein Formwerkzeug zur Ausbildung der Kunststoffartikel eingespritzt. -

Üblicherweise werden die Kunststoffgranulate und dergleichen über Seitendosierungen oder Einfülltrichter der Plastifiziereinheit kontinuierlich oder in Zeitabständen oder abhängig vom Füllungsstand der Plastifiziereinheit zugeführt. Dabei kann es abhängig von den Betriebsbedingungen zu Über- oder Unterdosierungen kommen, und bei der Umstellung auf die Fertigung eines neuen Artikels müssen neue Dosiermengen eingestellt werden.

In der JP 62198417 ist ein Verfahren zur automatischen Versorgung einer Einspritzeinrichtung mit Material beschrieben, wobei die Einspritzmenge durch die vorderste und die rückwärtigste Position einer vor- und zurück verfahrbaren Schnecke ermittelt wird. Mit der so ermittelten Einspritzmenge wird Material abgewogen und einer Einfülleinrichtung für den nächsten Aufschmelzvorgang zugeführt.

Aus der JP 2000334775 ist eine Spritzgießeinrichtung bekannt, die einen statischen Mischer sowie eine Zylinder-Kolben-Einspritzeinrichtung umfasst. Der statische Mischer hat auf den Befüllvorgang der Zylinder-Kolben-Einspritzeinrichtung keinen Einfluss und wirkt diesbezüglich wie eine Drossel. Aus diesem Grunde übernimmt ein Ausgangsmaterialversorgungs-System die Rolle der aktiven Befüllung der Zylinder-Kolben-Einspritzeinrichtung. Um die korrekte Befüllung der Zylinder-Kolben-Einspritzeinrichtung zu gewährleisten, muss der Betrieb des Ausgangsmaterialversorgungs-Systems gesteuert werden. Dies wird in der JP 2000334775 durch eine Kombination von 3 Drucksensoren, erreicht, welche an der Innenwand der Zylinder-Kolben-Einspritzeinrichtung, am Auslass des statischen Mischers und auf der Auslassseite des Ausgangsmaterialversorgungs-Systems angeordnet sind. Auf der Grundlage der von diesen Sensoren abgegebenen Signale wird das Ausgangsmaterialversorgungs-Systems gesteuert.

In der US 2001/0048181 sind verschiedene Ausführungsformen einer Vorrichtung zur Herstellung von verstärkten thermoplastischen Composit-Materialien dargestellt und beschrieben. Manche Ausführungsformen beinhalten einen Einwellenextruder, einen Doppelwellenextruder und eine Kolben-Zylinder-Einspritzeinrichtung. In die Doppelwellenextruder wird ein Verstärkungsmaterial einer Schmelze zugeführt und kompoundiert. Das so kompoundierte Material wird diskontinuierlich der Kolben-Zylinder-Einspritzeinrichtung zugeführt und von dort in eine Werkzeugform eingebracht.

Der Erfindung liegt die Aufgabe zugrunde, ein Verfahren zum Steuern bzw. Regeln eines oben bezeichneten Spritzgieß-Compounders anzugeben bei denen Fehldosierungen weitgehend vermieden werden können und bei denen bei einem Artikelwechsel abweichende Dosierungen nicht eingestellt werden müssen.

Die Lösung dieser Aufgabe erfolgt alternativ durch Verfahren gemäß dem Patentanspruch 1; die abhängigen Ansprüche betreffen vorteilhafte Weiterentwicklungen der Erfindung.

Erfindungsgemäß wird vorgeschlagen, das Volumen des Einspritzmengenstromes zu ermitteln und abhängig davon die Dosiervorrichtung zu betreiben. So kann pro Zeiteinheit die Volumenmenge an Zuschlagsstoffen zugeführt werden, die nach der Plastifizierung dem abgeführten Volumen entspricht.

Vorzugsweise wird in das Volumen aus der Zykluszeit und dem Hubvolumen des Einspritzaggregats ermittelt. Bei kurzen Zykluszeiten wird somit die Dosiermenge erhöht, bei geringen Zykluszeiten vermindert; bei großem Hubvolumen wird die Dosiermenge erhöht, bei geringem Hubvolumen vermindert.

Bei einem anderen Regelverfahren, das dieser Erfindung nicht entspricht wird der Druck im Kopf des Compounders bzw. der Plastifiziereinheit ermittelt und als Führungsgröße zur Ansteuerung der Dosiervorrichtung verwendet. Ein zu hoher Druck im Kopf der Plastifiziereinheit zeigt an, dass eine zu große Menge an Zuschlagsstoffen zugeführt wurde, ein zu geringer Druck zeigt an, dass eine zu geringe Menge an Zuschlagsstoffen zugeführt wurde. Dementsprechend wird der Dosierstrom der Dosiervorrichtung umgekehrt proportional zur Änderung des Druckes verändert.

Der erfindungsgemäßen Verfahren eignen sich auch zur gleichzeitigen Steuerung bzw. Regelung mehrerer Dosiervorrichtungen, die dieselbe Plastifiziereinheit beschicken.

## Patentansprüche

1. Verfahren zum Steuern der Zufuhrmengen von Zuschlagsstoffen für einen Spritzgieß-Compounder mit
- einer eine drehbare Plastifizierschnecke aufweisenden Plastifiziereinheit,
- einem Einspritzaggregat und
- einer Dosiervorrichtung zur Zuführung von Zuschlagstoffen,
**dadurch gekennzeichnet,**
**dass** das Volumen eines Einspritzmengenstroms aus einer Volumenmenge pro Zeiteinheit ermittelt wird und
die Dosiervorrichtung abhängig von dem ermittelten Volumen des Einspritzmengenstromes betrieben wird.

2. Verfahren nach Anspruch 1,
**dadurch gekennzeichnet,**
**dass** das Volumen des Einspritzmengenstroms aus der Zykluszeit und dem Hubvolumen des Einspritzaggregates ermittelt wird.

3. Verfahren nach einem der Ansprüche 1 bis 2,
**dadurch gekennzeichnet,**
**dass** mehrere Dosiervorrichtungen gleichzeitig nach einem Verfahren, wie in den Ansprüche 1 bis 2 genannt, gesteuert oder geregelt werden.

## Claims

1. A method for controlling the quantities of additives supplied for an injection moulding-compounding machine comprising
- a plasticizer unit comprising a rotatable plasticizing screw,
- an injection unit and
- a metering device for supplying additives,
**characterised in**
**that** the volume of an injection mass flow is determined from a volume quantity per unit time and
the metering device is operated depending on the volume of the injection mass flow.

2. The method according to claim 1,
**characterised in**
**that** the volume of the injection mass flow is determined from the cycle time and the stroke volume of the injection unit.

3. The method according to any one of claims 1 to 2,
**characterised in**
**that** a plurality of metering devices are controlled or regulated at the same time according to a method as specified in claims 1 to 2.

## Revendications

1. Procédé de commande des quantités d'admission d'agrégats pour une presse injection avec mélangeur avec
- un élément plastifié pivotant comportant une vis sans fin plastifiée,
- un agrégat d'injection et
- un dispositif de dosage pour l'admission des agrégats,
**caractérisé en ce que**,
le volume d'un flux massique d'injection est transmis à partir d'une quantité volumique par unité de temps et
le dispositif de dosage est actionné en fonction du volume transmis de flux massique d'injection.

2. Procédé selon la revendication 1,
**caractérisé en ce que**,
le volume du flux massique d'injection est transmis à partir du temps de cycle et du volume d'élévation de l'agrégat d'injection.

3. Procédé selon l'une des revendications 1 à 2,
**caractérisé en ce que**,
plusieurs dispositifs de dosage sont commandés ou réglés en même temps selon un procédé, comme cela est indiqué dans les revendications 1 à 2.
